# EUROPEAN PATENT SPECIFICATION

(11) **EP 0 719 826 B1**
(45) Date of publication and mention of the grant of the patent: **12.09.2001**
(21) Application number: 95203495.7
(22) Date of filing: 14.12.1995
(51) Int. Cl.: C08K 5/20, C08K 5/103, C08L 23/04

(54) **Ethylene polymer composition**
Ethylenpolymer-Zusammensetzung
Composition de polymère éthylénique

(30) Priority: 27.12.1994 US 364189
(43) Date of publication of application: 03.07.1996
(73) Proprietor: SOLVAY POLYOLEFINS EUROPE - BELGIUM (Société Anonyme), 1050 Bruxelles (BE)
(72) Inventor: Carter, Stephen J., Humble, Texas 77346 (US); Coppens, Wim, B-9070 Destelbergen (BE)
(74) Representative: Destryker, Elise Martine

(56) References cited:
- EP-A- 0 567 058
- DE-B- 1 218 723
- GB-A- 906 174
- GB-A- 1 490 938
- US-A- 5 077 328
- US-A- 5 098 939
- PATENT ABSTRACTS OF JAPAN vol. 14 no. 459 (C-0767) ,4 October 1990 & JP-A-02 187441 (KOHJIN) 23 July 1990,

## Description

The invention relates to an ethylene polymer composition containing a diol.

Ethylene polymers are known to present a low resistance to thermooxidative deterioration and to discolouration. In order to avoid degradation reactions and discolouration of polyolefins, there has already been proposed in the British Patent Specification GB-1,490,938 to incorporate into the polyolefin symmetrical triarylphosphites in combination with phenolic antioxidants. In example 1 of this patent specification, 100 parts unstabilised high density polyethylene are mixed with 0,05 part of pentaerythritol-tetra [3-(3,5-di-t-butyl-4-hydroxyphenyl)-propionate] and 0,1 part of tris(2,4-di-t-butylphenyl)-phosphite. This known composition presents the drawback that, when used in several consecutive melt-processes, such as for example the reprocessing of regrind from blow moulding or thermoforming operations, a pronounced discolouration phenomenon still occurs.

The invention overcomes this disadvantage by providing a composition based on ethylene polymer with a low sensitivity to discolouration.

To this end, the invention relates to an ethylene polymer composition consisting of, per 100 parts by weight of an ethylene polymer chosen from ethylene homopolymers and ethylene copolymers comprising at most 5 % by weight of comonomer containing up to 12 carbon atoms, and having a density according to the ISO 1183 (1987) standard of at least 935 kg/m³, from 0,05 to 5 parts by weight of a diol containing at least one hydroxymethyl (-CH₂OH) group, i.e. a primary hydroxyl group, at least one anti-oxydant, and, optionally, additives selected from stabilizers, organic colorants, antistatic agents and processing aids.

For the purpose of the present invention a diol is intended to define any organic compound comprising two hydroxyl groups which may be adjacent or not. Furthermore, a diol is intended to denote one or more diols corresponding to the specifications defined above. Good results are already obtained with only one diol. Similarly, ethylene polymer is intended to denote one or more ethylene polymers. It is however preferred to use a single ethylene polymer.

One of the essential characteristics of the invention is the presence of two hydroxyl groups in the diol at least one of which is present in the form of a hydroxymethyl radical. Preferably the diol contains no more than two hydroxyl groups.

According to a first variant of the invention, the diol contains two hydroxymethyl radicals (-CH₂OH).

According to a first embodiment of the first variant, the diol corresponds to the general formula 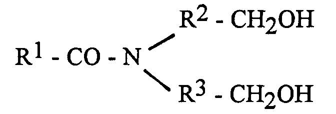 wherein R¹, R² and R³ are identical or different and denote each an optionally substituted cyclic or linear alkyl, alkenyl or alkoxy group containing up to 30 carbon atoms, preferably up to 20 carbon atoms. Good results have been obtained with such diols wherein R² and R³ are identical. Especially satisfactory results can be obtained when R² and R³ are chosen from linear aliphatic hydrocarbon radicals containing up to 10 carbon atoms, in particular up to 6 carbon atoms such as methylene, ethylene, propylene and hexylene. Preferably R² and R³ are identical and denote methylene. R¹ is advantageously chosen from linear saturated aliphatic hydrocarbon radicals containing up to 20 carbon atoms, in particular from 8 to 18 carbon atoms such as heptadecyl, pentadecyl, tridecyl and undecyl. R¹ is preferably heptadecyl or undecyl. Particularly preferred diols according to the first embodiment are N,N'-bis(2-hydroxyethyl)dodecamide with R¹ denoting undecyl and R² and R³ each denoting methylene and N,N'-bis(2-hydroxyethyl)stearamide with R¹ denoting heptadecyl and R² and R³ each denoting methylene.

According to a second embodiment of the first variant of the invention the diol containing two hydroxymethyl radicals corresponds to the general formula 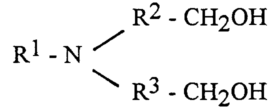 wherein R¹, R² and R³ are identical or different and denote an optionally substituted cyclic or linear alkyl, alkenyl or alkoxy group containing up to 30 carbon atoms, preferably up to 20 carbon atoms. Good results have been obtained with such diols wherein R² and R³ are identical. Especially satisfactory results can be obtained when R² and R³ are chosen from linear aliphatic hydrocarbon radicals containing up to 10 carbon atoms, in particular up to 6 carbon atoms such as methylene, ethylene, propylene and hexylene. Preferably R² and R³ are identical and denote methylene. R¹ is advantageously chosen from linear aliphatic hydrocarbon radicals containing up to 20 carbon atoms, in particular from 8 to 18 carbon atoms such as stearyl, dodecyl, tetradecyl, hexadecyl, octadecyl and cis-9-octadecenyl. R¹ may be saturated or unsaturated. R¹ may in particular contain up to and including two non-conjugated double bonds. Among the diols of the second embodiment preference is given to N,N'-bis(2-hydroxyethyl)-dodecylamine with R¹ denoting dodecyl and R² and R³ each denoting methylene, N,N'-bis(2-hydroxyethyl)tetradecylamine with R¹ denoting tetradecyl and R² and R³ each denoting methylene, N,N'-bis (2-hydroxyethyl)hexadecylamine with R¹ denoting hexadecyl and R² and R³ each denoting methylene, N,N'-bis (2-hydroxyethyl)octadecylamine with R¹ denoting octadecyl and R² and R³ each denoting methylene, and N,N'-bis (2-hydroxyethyl)cis-9-octadecenyl-amine with R¹ denoting cis-9-octadecenyl and R² and R³ each denoting methylene.

The composition according to the second embodiment appears especially suitable since it offers the advantage not only to improve the resistance to discolouration of the composition but also to lower its sensitivity to thermooxidative degradation, reflected by a stability of its melt index when passed several times in a melting-solidification device such as an extruder.

Besides the diol and the ethylene polymer, the composition according to the first variant of the invention may further contain usual additives such as stabilizers (for example anti-acids, anti-oxidants and/or anti-UV), organic colorants, antistatic agents and processing aids. The content of each of these additives is generally less than 10 parts by weight per 100 parts by weight of ethylene polymer. Excellent results may be obtained when besides the diol and the ethylene polymer, the composition comprises from 0,01 to 1,00 part by weight (especially from 0,02 to 0,50 part by weight, preferably from 0,04 to 0,1 part by weight) of an anti-oxidant chosen from the sterically hindered phenol type anti-oxidants, from the phosphite type anti-oxidants, from the phosphonite type anti-oxidants and their mixtures.

Sterically hindered phenol type anti-oxidants may be chosen from o-substituted phenols, 2,6-dialkylphenols, bisphenols, amides of beta-(3,5-di-t-butyl-4-hydroxyphenyl)-propionic acid, esters of beta-(3,5-di-t-butyl-4-hydroxyphenyl)-propionic acid with mono- or polyvalent alcohols. Examples of sterically hindered phenol type anti-oxidants are stearyl beta-(3,5-di-t-butyl-4-hydroxyphenyl)-propionate, octadecyl-3,5-di-t-butyl-4-hydroxy-hydrocinnamate, 2,6-di-t-butyl-4-methylphenol, pentaerythrityl tetrakis(3,5-di-t-butyl-4-hydroxyphenyl propionate), bis(beta-3,5-di-t-butyl-4-hydroxyphenylethyl)suberate, N,N'-bis((3-(3',5'-di-t-butyl-4'-hydroxyphenyl)-propionyl))hexamethylenediamine.

Phosphite type anti-oxidants are generally chosen from aryl containing phosphites, especially from symmetrical triarylphosphites. Examples of phosphite type anti-oxidants are tris-(2,4-di-t-butylphenyl)phosphite, tris-(2-t-butyl-4-methylphenyl)-phosphite, tris-p-nonyl-phenylphosphite, tris(2,4-dinonylphenyl)phosphite, bis(2,4-di-t-butyl)pentaerythritol diphosphite.

Phosphonite type anti-oxidants may be chosen from aryl containing phosphonites, from diphosphonites, in particular aryl containing diphosphonites. Examples of phosphonite type anti-oxidants are tetrakis[2,4-di-t-butylphenyl]4.4'-biphenylylenediphosphonite.

The preferred anti-oxidants are the sterically hindered phenol type anti-oxidants and the aryl phosphite type anti-oxidants. Especially preferred is tris(2,4-di-t-butylphenyl)phosphite. Compositions including from 0,04 to 0,10 part by weight of an aryl phosphite type antioxidant are particularly recommended.

The content of each of the usual additives described above is generally less than 10 parts by weight per 100 parts by weight of ethylene polymer, especially from 0,05 to 2 parts by weight.

The composition according to the first variant presents a low sensitivity to discolouration, even without resort to high performance phosphite type additive which are typically added to prevent such a situation from occuring.

The composition according to the first variant also presents the advantage of imparting an antistatic activity to the ethylene polymer, a property useful for articles formed from such a polymer.

According to a second variant of the invention the diol of the composition contains only one hydroxymethyl radical. The other hydroxyl group is not a primary hydroxyl group. Especially preferred are the glycerol monoesters. Esters of a fatty acid containing up to 25 carbon atoms, in particular up to 20 carbon atoms, such as stearate or laurate are suitable. The best results can be obtained with glycerol monostearate.

Besides the diol and the ethylene polymer, the composition according to the second variant of the invention may also further contain usual additives such as stabilizers (for example anti-acids, anti-oxidants and/or anti-UV), organic colorants, antistatic agents or processing aids. The content of each of the additives is generally less than 10 parts by weight per 100 parts by weight of ethylene polymer. Advantageously the composition contains besides the diol and the ethylene polymer from 0,05 to 2 parts by weight (in particular from 0,05 to 0,50 part by weight, especially from 0,05 to 0,20 part by weight) of a phosphite type anti-oxidant such as defined above per 100 parts by weight of ethylene polymer. The phosphite type anti-oxidant is preferably tris(2,4-di(t-butylphenyl)phosphite.

Good results can be obtained when the composition according to the second variant of the invention further comprises less than 1 part by weight (in particular less than 0,5 part by weight, the values of less than 0,1 part by weight being recommended) of a sterically hindered phenol type anti-oxidant such as defined above, in particular pentaerythrityl tetrakis(3,5-di-t-butyl-4-hydroxyphenyl)propionate. Preferably, the sterically hindered phenol type anti-oxidant is present in a quantity as low as possible, or even absent. If such an anti-oxidant is present, its content is usually at least 0,05 part by weight per 100 parts by weight of ethylene polymer.

Finally the composition according to the second variant of the invention appears most suitable when it further contains less than 1 part by weight (in particular less than 0,5 part by weight, the values less than 0,1 part by weight being recommended) of a sterically hindered phosphonite type anti-oxidant such as defined above, in particular tetrakis[2,4-di-t-butylphenyl]4.4'-biphenylylenediphosphonite. Preferably, the sterically hindered phosphonite type anti-oxidant is present in a quantity as low as possible, or even absent. If such an anti-oxidant is present, its content is usually at least 0,05 part by weight per 100 parts by weight of ethylene polymer.

Advantageously the composition according to any variant of the invention contains one or more of the above described diols in a total quantity of at least 0,06 part by weight per 100 parts by weight of ethylene polymer. Particularly satisfactory results are obtained with total diol contents of at least 0,08 part by weight, values of at least 0,10 part by weight being most recommended. The total diol content is advantageously at most 1 part by weight per 100 parts by weight of ethylene polymer, maximum total contents of 0,2 part by weight being preferred, in particular contents of at most 0,15 part by weight. The especially preferred contents are from 0,08 to 1 part by weight per 100 parts by weight of ethylene polymer.

The composition according to the invention also contains at least one ethylene polymer. Ethylene polymer is intended to denote ethylene homopolymers and ethylene copolymers comprising at most 5 % by weight of comonomer containing up to 12 carbon atoms.

The ethylene copolymers may contain a single comonomer or a number of different comonomers. The comonomers may, for example, be chosen from alpha-olefins, such as propylene, butene, hexene, 4-methyl-1-pentene, octene and decene. Suitable comonomers are alpha-olefins containing from 4 to 8 carbon atoms, especially from 4 to 6 carbon atoms. The preferred comonomers are butene, hexene and mixtures thereof. The particularly preferred comonomer is hexene. Generally, the comonomer content of the copolymer is at least 0,01 % by weight, in particular at least 0,05 % by weight, contents of at least 0,1 % by weight being most advantageous. The comonomer content is at most 5 % by weight, especially at most 4 % by weight, the values of at most 3 % by weight being most suitable. Particularly performing results can be obtained with comonomer contents from 0,2 to 1,5 % by weight.

The ethylene polymers have a density measured according to the ISO 1183 (1987) standard of at least 935 kg/m³, in most cases at least 940 kg/m³, values of at least 945 kg/m³ being the most favorable. The density is usually at most 965 kg/m³, especially at most 962 kg/m³, values of at most 960 kg/m³ being recommended. The preferred densities are from 948 to 960 kg/m³.

The ethylene polymers generally have a melt index (MI), measured at 190 °C under a 2,16 kg load according to ASTM Standard D 1238 (1986) of at least 0,05 g/10 min, in particular at least 0,1 g/10 min, values of at least 0,15 being most suitable. The melt index currently does not go beyond 5 g/10 min, preferably 2 g/10 min, values of at most 1 g/10 min being most favorable. Melt indexes from 0,15 to 0,70 g/10 min are preferred.

In most cases, the ethylene polymers are additionally characterized by a ratio of high load melt index (HLMI) to melt index (MI) [the high load melt index being measured at 190 °C under a 21,6 kg load according to the ASTM D 1238 (1986) standard] of at least 50, in particular at least 70, values of at least 85 being most suitable. The ratio HLMI/MI currently does not go beyond 180, preferably 150, values of at most 145 being most favorable.

Furthermore, the ethylene polymers usually have a molecular mass distribution characterized by a ratio M_{w}/Mₙ (M_{w} being the weight average molecular mass of the ethylene polymer and Mₙ the number average molecular mass of the ethylene polymer) measured by steric exclusion chromatography carried out in 1,2,4-trichlorobenzene at 135 °C using a 150 C WATERS chromatograph, of at least 5, in particular at least 6, ratios of at least 8 being most advantageous. The M_{w}/Mₙ ratio is generally at most 22, especially at most 20, the ratios of at most 18 being most suitable.

Among the ethylene polymers preference is given to ethylene copolymers, more particularly to copolymers of ethylene with hexene and/or butene.

The composition according to the invention may be obtained by any suitable known means, for example by mixing the ethylene polymer with the diol at ambient temperature, followed by mixing at a temperature above the melting temperature of the ethylene polymer, for example in a mechanical mixer or in an extruder. An alternative method consists in introducing the diol into the ethylene polymer which is already molten.

The procedure is preferably carried out in two successive stages, the first consisting in mixing the ethylene polymer, the diol and optionally one or more additives at ambient temperature, the second step consisting in continuing the mixing in the melt in an extruder. The temperature in the second stage is generally from 100 to 300 °C, in particular from 120 to 250 °C, preferably from 130 to 210 °C.

The composition according to the invention offers the advantage that it presents a high colour stability even when subjected several times to melt-processing.

The composition according to the invention can be processed by any of the conventional processes for manufacturing shaped objects of ethylene polymer and more particularly by the extrusion, blow extrusion, extrusion-thermoforming, blow moulding and injection moulding processes. Good results can be obtained when the composition is processed by blow moulding. It is suitable for the manufacture of shaped objects such as foils, sheets, containers, bags, sachets, reservoirs and tubes, especially for reservoirs of 1 to 5000 liters.

The examples whose description follows serve to illustrate the invention. Examples 2 and 4 are given by way of comparison and are based on the prior art as disclosed in British Patent Specification GB-1,490,938. The meaning of the symbols employed in these examples, the units expressing the quantities mentioned and the methods of measurement of these quantities are detailed below.
- MI =: melt index of a polymer expressed in g/10 min and measured at 190 °C under a load of 2,16 kg according to ASTM d 1238 - Condition E standard (1986).
- HLMI =: high load melt index of a polymer expressed in g/10 min and measured at 190 °C under a load of 21,6 kg according to ASTM D 1238 - Condition F standard (1986).
- YI =: yellowness index measured according to ASTM D 1925 Standard (1988).
- B colour =: colour parameter "B" measured according to ASTM D 2244 Standard (1979).

### Example 1 (in accordance with the invention)

A blend containing 100 parts by weight of an ethylene copolymer exhibiting a hexene concentration of 0,4 % by weight, a density of 955 kg/m³ and a MI of 0,2 g/10 min, 0,10 part by weight of glycerol monostearate, and 0,15 part by weight of a mixture containing 50 % pentaerythrityl tetra(3,5-di-t-butyl-4-hydroxyphenyl propionate) and 50 % tris(2,4-di-t-butylphenyl)phosphite was fed to the feed section of a single screw AXON BX18 extruder. The molten polymer was brought to a temperature of 240 °C. The molten polymer was quenched under a nitrogen atmosphere and cut into pellets at the exit of the extruder. The pellets so obtained were then subjected to three more identical extrusions under air without adding further additives. After the first, the second and the fourth extrusions the pellets were analysed for colour stability. The results are presented in table I.

**Table I**

| number of extrusions | YI |
|---|---|
| 1 | -0,44 |
| 2 | 1,44 |
| 4 | 5,63 |

### Example 2 (given by way of comparison)

The operations of example 3 were repeated exept for the incorporation of the diol which was omitted. The results are shown in table II.

**Table II**

| number of extrusions | YI |
|---|---|
| 1 | 2,46 |
| 2 | 8,46 |
| 4 | 15,15 |

A comparison of the results of example 2 with those obtained in example 1 reveals the progress brought about by the invention insofar as colour stability already after one extrusion is concerned.

### Example 3 (in accordance with the invention)

A blend containing 100 parts by weight of an ethylene copolymer exhibiting a hexene concentration of 1,2 % mol, a density of 0,948 kg/m³ and a MI of 0,36 g/10 min, 0,15 part by weight of a mixture containing 50 % pentaerythrityl tetra(3,5-di-t-butyl-4-hydroxyphenyl propionate) and 50 % tris(2,4-di-t-butylphenyl)phosphite and 0,12 part by weight of N,N'-bis(2-hydroxyethyl)dodecamide was continuously added to the feed section of a twin screw ZSK 30mm extruder. The molten polymer was brought to a temperature of 230°C. The molten polymer was quenched and cut into pellets at the exit of the extruder. The pellets so obtained were then subjected to four more identical extrusions without supplying more additives. After the first, the third and the fifth extrusions, the pellets were analysed for colour stability and for thermooxidative stability. The results are presented in table III.

**Table III**

| number of extrusions | B colour | HLMI | MI |
|---|---|---|---|
| 1 | 0,8 | 23,8 | 0,09 |
| 3 | 2,6 | 22,5 | 0,05 |
| 5 | 3,7 | 19,0 | 0,02 |

### Example 4 (given by way of comparison)

The operations of example 3 were repeated exept for the incorporation of the diol which was omitted. The results are shown in table IV.

**Table IV**

| number of extrusions | B colour | HLMI | MI |
|---|---|---|---|
| 1 | 8,6 | 22,3 | 0,13 |
| 3 | 10,6 | 20,4 | 0,08 |
| 5 | 11,1 | 18,7 | 0,07 |

A comparison of the results of example 4 with those obtained in example 3 reveals the progress brought about by the invention insofar as colour stability already after one extrusion is concerned (reflected by B colour values which are higher in example 4) and insofar as thermal oxidative stability is concerned (reflected by the HLMI values which remain equal to those shown in example 4).

### Example 5 (in accordance with the invention)

The operations of example 3 were repeated except that 0,12 part by weight of a mixture comprising mainly N,N'-bis(2-hydroxyethyl)laurylamine and N,N'-bis(2-hydroxyethyl)tetradecylamine in a 5:2 ratio was incorporated in stead of the N,N'-bis(2-hydroxyethyl)dodecamide. The results are presented in Table V.

**Table V**

| number of extrusions | B colour | HLMI | MI |
|---|---|---|---|
| 1 | 6,4 | 16,8 | 0,09 |
| 3 | 9,2 | 16,8 | 0,06 |
| 5 | 12,7 | 14,8 | 0,03 |

### Example 6 (in accordance with the invention)

The operations of example 3 were repeated except that 0,12 part by weight of a mixture of the following amines was incorporated : N,N'-bis(2-hydroxyethyl)hexadecylamine (25.5 %), N,N'-bis(2-hydroxyethyl)stearylamine (19.5 %) and N,N'-bis(2-hydroxyethyl)cis-9-octadecenylamine (41 %), (other aliphatic amines each < %) in stead of the N,N'-bis (2-hydroxyethyl)dodecamide. The results are shown in Table VI.

**Table VI**

| number of extrusions | B colour | HLMI | MI |
|---|---|---|---|
| 1 | 7,7 | 20,1 | 0,11 |
| 3 | 11,0 | 19,4 | 0,07 |
| 5 | 13,3 | 18,1 | 0,05 |

### Example 7 (in accordance with the invention)

The operations of example 3 were repeated except that the extrusion temperature was lowered to 225°C and that 0,08 part by weight of a mixture of the following amines was incorporated : N,N'-bis(2-hydroxyethyl)palmitylamine (25,5 %), N,N'-bis(2-hydroxyethyl)stearylamine (19,5 %) and N,N'-bis(2-hydroxyethyl)cis-9-octadecenylamine (41 %), (other aliphatic amines each < 5 %) in stead of 0,12 part by weight of the N,N'-bis (2-hydroxyethyl)dodecamide. The results are shown in Table VII.

**Table VII**

| number of extrusions | B colour | HLMI | MI |
|---|---|---|---|
| 1 | 3,5 | 28,6 | 0,18 |
| 3 | 6,5 | 29,4 | 0,18 |
| 5 | 8,4 | 31,2 | 0,18 |

### Example 8 (in accordance with the invention)

The operations of example 7 were repeated except that in addition 0,04 part by weight of octadecyl-3,5-di-t-butyl-4-hydroxy-hydrocinnamate was incorporated. The results are shown in Table VIII.

**Table VIII**

| number of extrusions | B colour | HLMI | MI |
|---|---|---|---|
| 1 | 3,6 | 28,5 | 0,21 |
| 3 | 6,9 | 31,0 | 0,20 |
| 5 | 9,2 | 32,2 | 0,17 |

### Example 9 (in accordance with the invention)

The operations of example 7 were repeated except that in addition, 0,04 part by weight of tris(2,4-di-t-butylphenyl)phosphite was incorporated. The results are shown in Table IX.

**Table IX**

| number of extrusions | B colour | HLMI | MI |
|---|---|---|---|
| 1 | 2,5 | 27,8 | 0,21 |
| 3 | 6,0 | 31,5 | 0,21 |
| 5 | 8,5 | 31,6 | 0,18 |

## Claims

1. An ethylene polymer composition consisting of, per 100 parts by weight of ethylene polymer chosen from ethylene homopolymers and ethylene copolymers comprising at most 5 % by weight of comonomer containing up to 12 carbon atoms, and having a density according to the ISO 1183 (1987) standard of at least 935 kg/m³, from 0,05 to 5 parts by weight of a diol containing at least one hydroxymethyl (-CH₂OH) group, at least one anti-oxydant, and, optionally, additives selected from stabilizers, organic colorants, antistatic agents and processing aids.

2. The composition according to claim 1, comprising from 0,08 to 1 part by weight of the diol per 100 parts by weight of ethylene polymer.

3. The composition according to claim 1 or 2, wherein the diol contains two hydroxymethyl (-CH₂OH) groups.

4. The composition according to claim 3, containing from 0,01 to 1,00 part by weight of at least one anti-oxidant chosen from the sterically hindered phenol type anti-oxidants, from the phosphite type anti-oxidants, from the phosphonite type anti-oxidants and their mixtures.

5. The composition according to any one of claims 3 to 4, wherein the diol corresponds to the general formula 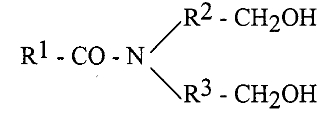 wherein R¹, R² and R³ are identical or different and denote each an optionally substituted cyclic or linear alkyl, alkenyl or alkoxy group containing up to 30 carbon atoms.

6. The composition according to claim 5, wherein R² and R³ each denote methylene and R¹ denotes heptadecyl or undecyl.

7. The composition according to any one of claims 3 to 4, wherein the diol corresponds to the general formula 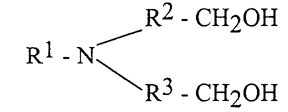 wherein R¹, R² and R³ are identical or different and denote each an optionally substituted cyclic or linear alkyl, alkenyl or alkoxy group containing up to 30 carbon atoms.

8. The composition according to claim 7, wherein R² and R³ each denote methylene and R¹ denotes stearyl, dodecyl, tetradecyl, hexadecyl, octadecyl or cis-9-octadecenyl.

9. The composition according to claim 7 or 8, containing from 0,04 to 0,10 part by weight per 100 parts by weight of ethylene polymer of an aryl phosphite type anti-oxidant.

10. The composition according to claim 1 or 2, wherein the diol contains only one hydroxymethyl group, the composition containing from 0,05 to 2 parts by weight of a phosphite type anti-oxidant per 100 parts by weight of ethylene polymer.

11. The composition according to claim 10, wherein the diol is a glycerol monoester.

12. The composition according to claim 11, wherein the glycerol monoester is an ester of a fatty acid containing up to 25 carbon atoms.

13. The composition according to claim 12, wherein the glycerol monoester is glycerol monostearate.

14. The composition according to any one of claims 9 to 13, wherein the phosphite type anti-oxidant is tris(2,4-di-t-butylphenyl)phosphite.

15. The composition according to any one of claims 1 to 14, wherein the ethylene polymer is chosen from the group consisting of ethylene copolymers containing from 0,01 to 5 % by weight of an alpha-olefin containing up to 12 carbon atoms, and wherein the ethylene polymer presents a density from 935 to 965 kg/m³, a melt index measured at 190 °C under a 2,16 kg load according to ASTM D 1238 (1986) standard from 0,05 to 5 g/10 min.

## Patentansprüche

1. Ethylenpolymerzusammensetzung, bestehend aus, pro 100 Gewichtsteile Ethylenpolymer, ausgewählt aus Ethylenhomopolymeren und Ethylencopolymeren, umfassend maximal 5 Gewichtsprozent bis zu 12 Kohlenstoffatome enthaltendes Comonomer, und mit einer Dichte gemäß ISO-Standard 1183 (1987) von mindestens 935 kg/m³, 0,05 bis 5 Gewichtsteilen eines mindestens eine Hydroxymethylgruppe (-CH₂OH) enthaltenden Diols, mindestens einem Antioxidationsmittel und gegebenenfalls Additiven, ausgewählt aus Stabilisatoren, organischen Färbemitteln, antistatischen Mitteln und Verarbeitungshilfen.

2. Zusammensetzung nach Anspruch 1, umfassend 0,08 bis 1 Gewichtsteil des Diols pro 100 Gewichtsteile Ethylenpolymer.

3. Zusammensetzung nach Anspruch 1 oder 2, wobei das Diol zwei Hydroxymethylgruppen (-CH₂OH) enthält.

4. Zusammensetzung nach Anspruch 3, enthaltend 0,01 bis 1,00 Gewichtsteil von mindestens einem Antioxidationsmittel, ausgewählt aus Antioxidationsmitteln vom sterisch gehinderten Phenoltyp, aus Antioxidationsmitteln vom Phosphittyp, aus Antioxidationsmitteln vom Phosphonittyp und deren Gemischen.

5. Zusammensetzung nach einem der Ansprüche 3 bis 4, wobei das Diol der allgemeinen Formel 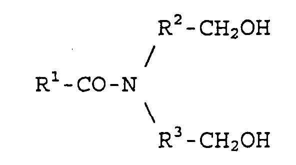 entspricht, worin R¹, R² und R³ gleich oder verschieden voneinander sind und jeweils eine gegebenenfalls substituierte cyclische oder lineare Alkyl-, Alkenyl- oder Alkoxygruppe, die bis zu 30 Kohlenstoffatome enthält, bedeuten.

6. Zusammensetzung nach Anspruch 5, wobei R² und R³ jeweils Methylen bedeuten und R¹ Heptadecyl oder Undecyl bedeutet.

7. Zusammensetzung nach einem der Ansprüche 3 bis 4, wobei das Diol der allgemeinen Formel 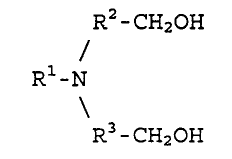 entspricht, worin R¹, R² und R³ gleich oder verschieden voneinander sind und jeweils eine gegebenenfalls substituierte cyclische oder lineare Alkyl-, Alkenyl- oder Alkoxygruppe, die bis zu 30 Kohlenstoffatome enthält, bedeuten.

8. Zusammensetzung nach Anspruch 7, wobei R² und R³ jeweils Methylen bedeuten und R¹ Stearyl, Dodecyl, Tetradecyl, Hexadecyl, Octadecyl oder cis-9-Octadecenyl bedeutet.

9. Zusammensetzung nach Anspruch 7 oder 8, enthaltend 0,04 bis 0,10 Gewichtsteile eines Antioxidationsmittels vom Arylphosphittyp pro 100 Gewichtsteile Ethylenpolymer.

10. Zusammensetzung nach Anspruch 1 oder 2, wobei das Diol nur eine Hydroxymethylgruppe enthält, wobei die Zusammensetzung 0,05 bis 2 Gewichtsteile eines Antioxidationsmittels vom Phosphittyp pro 100 Gewichtsteile Ethylenpolymer enthält.

11. Zusammensetzung nach Anspruch 10, wobei das Diol ein Glycerinmonoester ist.

12. Zusammensetzung nach Anspruch 11, wobei der Glycerinmonoester ein Ester einer Fettsäure ist, die bis zu 25 Kohlenstoffatome enthält.

13. Zusammensetzung nach Anspruch 12, wobei der Glycerinmonoester Glycerinmonostearat ist.

14. Zusammensetzung nach einem der Ansprüche 9 bis 13, wobei das Antioxidationsmittel vom Phosphittyp Tris(2,4-di-t-butylphenyl)phosphit ist.

15. Zusammensetzung nach einem der Ansprüche 1 bis 14, wobei das Ethylenpolymer ausgewählt ist aus der Gruppe, bestehend aus Ethylencopolymeren, enthaltend 0,01 bis 5 Gewichtsprozent eines bis zu 12 Kohlenstoffatome enthaltenden α-Olefins und wobei das Ethylenpolymer eine Dichte von 935 bis 965 kg/m³, einen Schmelzindex, gemessen bei 190°C unter einer Last von 2,16 kg gemäß ASTM-Standard D 1238 (1986), von 0,05 bis 5 g/10 Minuten aufweist.

## Revendications

1. Composition de polymère éthylénique consistant en, pour 100 parts en poids de polymère éthylénique choisi parmi les homopolymères d'éthylène et les copolymères d'éthylène comprenant au plus 5 % en poids de comonomère contenant jusqu'à 12 atomes de carbone et présentant une densité selon le standard ISO 1183 (1987) d'au moins 935 kg/m³, de 0,05 à 5 parts en poids d'un diol contenant au moins un groupe hydroxyméthyle (-CH₂OH), au moins un agent antioxydant et, facultativement, des additifs choisis parmi les agents stabilisants, les colorants organiques, les agents antistatiques et les adjuvants de mise en oeuvre.

2. Composition selon la revendication 1, comprenant de 0,08 à 1 part en poids du diol par 100 parts en poids de polymère éthylénique.

3. Composition selon la revendication 1 ou 2, dans laquelle le diol contient deux groupes hydroxyméthyles (-CH₂OH).

4. Composition selon la revendication 3, contenant de 0,01 à 1,00 part en poids d'au moins un antioxydant choisi parmi les antioxydants de type phénol à empêchement stérique, parmi les antioxydants de type phosphite, parmi les antioxydants de type phosphonite et parmi leurs mélanges.

5. Composition selon l'une quelconque des revendications 3 à 4, dans laquelle le diol correspond à la formule générale 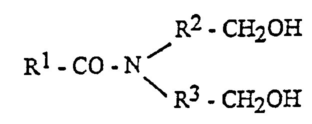 dans laquelle R1, R2 et R3 sont identiques ou différents et indiquent chacun un groupe alkyle, un groupe alcényle ou un groupe alcoxy, cyclique ou linéaire, facultativement substitué, contenant jusqu'à 30 atomes de carbone.

6. Composition selon la revendication 5, dans laquelle R2 et R3 représentent chacun un groupe méthylène et R1 représente un groupe heptadécyle ou un groupe undécyle.

7. Composition selon l'une quelconque des revendications 3 à 4, dans laquelle le diol correspond à la formule générale 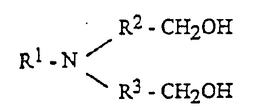 dans laquelle R1, R2 et R3 sont identiques ou différents et indiquent chacun un groupe alkyle, un groupe alcényle ou un groupe alcoxy, cyclique ou linéaire, facultativement substitué, contenant jusqu'à 30 atomes de carbone.

8. Composition selon la revendication 7, dans laquelle R2 et R3 indiquent chacun un groupe méthylène et R1 indique un groupe stéaryle, un groupe dodécyle, un groupe tétradécyle, un groupe hexadécyle, un groupe octadécyle ou un groupe cis-9-octadécényle.

9. Composition selon la revendication 7 ou 8, contenant de 0,04 à 0,10 part en poids d'un antioxydant de type arylphosphite par 100 parts en poids de polymère éthylénique.

10. Composition selon la revendication 1 ou 2, dans laquelle le diol contient seulement un groupe hydroxyméthyle, la composition contenant de 0,05 à 2 parts en poids d'un antioxydant de type phosphite par 100 parts en poids de polymère éthylénique.

11. Composition selon la revendication 10, dans laquelle le diol est un monoester de glycérol.

12. Composition selon la revendication 11, dans laquelle le monoester de glycérol est un ester d'acide gras contenant jusqu'à 25 atomes de carbone.

13. Composition selon la revendication 12, dans laquelle le monoester de glycérol est le monostéarate de glycérol.

14. Composition selon l'une quelconque des revendications 9 à 13, dans laquelle l'antioxydant de type phosphite est le tris(2,4-di-t-butylphényl)-phosphite.

15. Composition selon l'une quelconque des revendications 1 à 14, dans laquelle le polymère éthylénique est choisi parmi le groupe constitué de copolymères d'éthylène contenant de 0,01 à 5 % en poids d'une alpha-oléfine contenant jusqu'à 12 atomes de carbone, et dans laquelle le polymère éthylénique présente une densité de 935 à 965 kg/m3, un indice de fusion mesuré à 190 °C sous une charge de 2,16 kg conformément au standard ASTM D 1238 (1986) de 0,05 à 5 g/10 min.
